# EUROPEAN PATENT APPLICATION

(11) **EP 3 929 318 A1**
(43) Date of publication of application: **29.12.2021**
(21) Application number: 20200982.5
(22) Date of filing: 09.10.2020
(51) Int. Cl.: C22C 9/00, C22C 19/00, C22F 1/08

(54) **SELF-HEALING COBALT BASED ALLOYS AND MANUFACTURING METHOD FOR THE SAME**

(30) Priority: 22.06.2020 KR 20200075766
(71) Applicant: Seoul National University R&DB Foundation, Seoul 08826 (KR)
(72) Inventor: PARK, Eun Soo, 08826 Seoul (KR); YOON, Kook Noh, 08826 Seoul (KR); LEE, Jung Soo, 08826 Seoul (KR); YOO, Geun Hee, 08826 Seoul (KR); KIM, Ji Young, 08826 Seoul (KR)
(74) Representative: Brevalex

(57) **Abstract**

The present disclosure provides a cobalt-based alloy having self-healing property.

The cobalt-based alloy has composition as below: [[CoₐTi_{b}Cr_{100-a-b}]_{1-0.01c}S_{c}]_{1-0.01d}H_{d} (57≤a≤92.5 at.%, 6≤b≤33 at.%, a+b<100, S means strengthening solute elements, 0<c≤20 at.%, H means healing solute elements, and 0<d≤2 at.%), wherein self-healing function is implemented by the healing solute elements.

## Description

### BACKGROUND OF THE INVENTION

### 1. FIELD OF THE INVENTION

The present disclosure relates to self-healing cobalt-based alloy and manufacturing method for the same. Specifically, the present disclosure relates to a cobalt-based alloy and a manufacturing method for the same, wherein the cobalt-based alloy has a complex structure of austenite (γ) phase having face centered cubic (FCC) crystal structure and γ' phase of L1₂ structure and is utilizable at a higher temperature than an existing nickel-based alloy by containing, as a main element, cobalt having a higher melting point than the existing nickel-based alloy.

The present disclosure also relates to an alloy and a manufacturing method therefor, wherein the alloy can exhibit self-healing property to delay defect formation and propagation by adding healing solute elements enabling selective spontaneous diffusion into alloy defect sites to thereby allow the healing solute atoms to be quickly diffused and segregated around a crack formed at a high temperature.

### 2. DESCRIPTION OF THE PRIOR ART

With the progress of various research and development to deal with difficult problems with respect to extreme environments such as ultra-high temperatures, including high-efficiency power generators, such as Generation IV reactors and nuclear fusion reactors, space launch vehicles, and hypersonic aircraft, the development of materials that can be utilized in new complex extreme environments is required. Therefore, the development of a new material exceeding the properties of superalloys that have been utilized in the conventional art is needed. For example, the development of cobalt-based superalloys capable of being utilized at a higher working temperature is being actively made by avoiding Inconel or the like that uses, as a matrix, nickel which is a representative high-temperature material in the conventional art.

Existing superalloys having γ-γ' complex structure have a problem of deterioration of ductility due to characteristics of the complex structure. In particular, upon utilization at ultra-high temperatures, the occurrence of initial micro-scale cracks easily develops into macro-scale cracks, and such a problem is emerging as a limit in the stable utilization of related materials. Therefore, for the improvement of sustainability of γ-γ' complex structured alloys, a material is needed to be improved to have self-healing property so that the material itself can heal micro-scale defects.

### (Prior Art Documents)

### (Patent Document)

Glass corrosion resistant cobalt-based alloy having high strength, KR 10-0089177-0000

### (Non-patent document)

Science 312, 2006. "Cobalt-Base High-Temperature Alloys" J. Sato, et al., 2006, 90 - 92

### SUMMARY OF THE INVENTION

In this background, an aspect of the present disclosure is to provide self-healing cobalt-based alloy capable of replacing existing materials in extreme environments such as ultra-high temperatures by controlling the fractions of constituent elements according to characteristics of the alloy to thereby form an optimal γ-γ' complex structure.

Another aspect of the present disclosure is to solve a problem that even initial micro-cracks are highly likely to easily develop into macro-cracks due to creep and fatigue in extreme environments such as ultra-high temperatures, by introducing self-healing mechanism through selective preferential diffusion of solute elements.

Still another aspect of the present disclosure is to maximize sustainability of a material by adding healing solute elements enabling selective spontaneous diffusion into defect sites of alloy to allow the healing solute elements to be easily migrated and segregated into corresponding defects through quick diffusion even though cracks are formed at a high temperature, thereby enabling healing, such as delaying the formation and propagation of defects, such as cracks.

In accordance with an aspect of the present disclosure, there is provided a cobalt-based alloy having self-healing property. The cobalt-based alloy has the composition as below:

[[CoₐTi_{b}Cr_{100-a-b}]_{1-0.01c}S_{c}]_{1-0.01d}H_{d}

(57≤a≤92.5 at.%, 6≤b≤33 at.%, a+b<100, S means strengthening solute elements, 0<c≤20 at.%, H means healing solute elements, and 0<d≤2 at.%),
wherein the self-healing function is implemented by the healing solute element.

The cobalt-based alloy having self-healing property includes both of γ and γ' phases as constituent phases.

According to such a feature, the healing solute element is diffused and segregated into defect sites when defects, such as cracks, are formed in the use of the manufactured alloy. The segregated solute elements are supersaturated in solid solution in the defect sites to strengthen a softened deformation portion through the maximization of a strengthening effect, thereby implementing self-healing.

It is particularly preferable in the implementation of self-healing that the fraction of the γ' phase is less than 50%. It is also preferred that the size of the γ' phase is less than 1 µm.

It is also preferable that the alloy has a size of tens of nanometers and further contains secondary precipitates having the same composition and structure as the γ' phase.

The strengthening solute element is preferably at least one element selected from the group consisting of molybdenum (Mo), hafnium (Hf), Ta (tantalum (Ta), and tungsten (W).

The healing solute elements are preferably at least one selected from the group consisting of boron (B), carbon (C), nitrogen (N), oxygen (O), phosphorus (P), and sulfur (S) .

The alloy of the present disclosure is characterized in that in the environment of use of the alloy, the healing solute elements are diffused and segregated into the formed defect sites to strengthen defects, thereby implementing healing.

In the present disclosure, self-healing property can be exhibited by defining alloy composition enabling the formation of cobalt-based alloys, which can be utilized at a higher temperature than existing nickel-based alloys, through composition and process control, and adding healing solute elements enabling selective diffusion into defect sites of the alloys.

The term "self-healing property" refers to a property wherein the added healing solute elements are spontaneously diffused and segregated into defect sites in a high-energy state including micro-cracks and the like formed during the use of a material, thereby delaying the defect formation rate, leading to the recovery of property of a portion with the corresponding defects to an original state.

The cobalt-based alloy of the present disclosure contains: (1)Co as matrix; (2)Cr, as an alloying element easily forming solid solution with Co, having higher melting point than Co, improving oxidation resistance at a high temperature, and giving solid-solution strengthening effect by forming solid solution with the Co matrix; and (3)Ti, which forms L1₂ precipitation phase together with Co and Cr.

In addition, the strengthening solute elements are additional elements that control lattice misfits between the phases constituting the complex structure, and the strengthening solute elements are preferably at least one selected from the group consisting of molybdenum (Mo), hafnium (Hf), tantalum (Ta), and tungsten (W).

The healing solute elements are elements that are quickly diffused into microcracks in a high-energy state and thus exhibit self-healing property, and the healing solute elements are preferably at least one selected from the group consisting of boron (B), carbon (C), nitrogen (N), oxygen (O), phosphorus (P), and sulfur (S).

In addition, the present disclosure provides a cobalt-based alloy having self-healing property, the cobalt-based alloy having composition as below:

[[COₐTi_{b}Cr_{100-a-b}]_{1-0.01c}S_{c}]_{1-0.01d}H_{d}

wherein (1) when 6≤b≤11 (at.%), 70≤a≤86.5 (at.%), (2) when 11<b≤16 (at.%), 80≤a≤86.5 (at.%), and a+b<100;
S means strengthening solute elements, and 0<c≤0.5b (at.%);
H means healing solute elements, and 0<d≤0.5 at.%), and
the alloy has both of γ and γ' phases.

Furthermore, the present disclosure provides a method for manufacturing a cobalt-based alloy having self-healing property, the method including:
preparing and melting alloying elements to form a alloy;
subjecting the prepared alloy to solution treatment;
subjecting the solution-treated alloy to aging treatment to form precipitates of L1₂ crystal structure; and
cooling the alloy.

The shape, size, and phase fraction of the γ-γ' complex structure can be controlled by changing heat treatment conditions including the aging temperature or aging time in the aging treatment step.

The cobalt-based alloy according to the present disclosure can exhibit self-healing property to delay defect formation and propagation by alloying healing solute elements enabling selective spontaneous diffusion into defect sites to allow the corresponding element to be quickly diffused around cracks and then segregated when the cracks are formed at a high temperature.

Furthermore, the cobalt-based alloy according to the present disclosure has such self-healing mechanism, thereby dramatically improving creep resistance that is recognized as one of the biggest problems in the utilization of existing superalloys at ultra-high temperature, and thus can be utilized as a novel material for ultra-high-temperature part.

Furthermore, the cobalt-based alloy according to the present disclosure has excellent thermal stability by having γ-γ' complex structure. Therefore, the cobalt-based alloy according to the present disclosure can be utilized in the replacement of existing materials in extreme environments such as ultra-high-temperatures, including turbine parts for high-efficiency generation (rotors, blades, nozzles, diaphragms, bolts, bearings, coupling, gears, and the like), and ultra-high-speed transport vehicle propellants (combustion rooms, turbines, nozzles, and the like).

Furthermore, the γ-γ' complex structure of the cobalt-based alloy of the present disclosure can be manufactured through the control of a heat treatment, such as aging treatment, after solution treatment of alloys, thereby ensuring various microstructures and attaining property improvement.

### BRIEF DESCRIPTION OF THE DRAWINGS

The above and other aspects, features and advantages of the present disclosure will be more apparent from the following detailed description taken in conjunction with the accompanying drawings, in which:
FIG. 1 is a schematic diagram showing a composition range including both of γ and γ' phases on the 950°C isothermal section of the ternary phase diagram of cobalt (Co), chromium (Cr), and titanium (Ti), created through thermodynamic calculation.
FIG. 2 is a 950°C isothermal section of the pseudo-ternary phase diagram of cobalt (Co), chromium (Cr), and titanium (Ti), containing 1.5 at.% of molybdenum (Mo), created through thermodynamic calculation.
FIG. 3 is a graph showing three-stage heat treatment for forming γ-γ' complex structure of the present disclosure.
FIG. 4 is an isothermal section showing the results of depicting the composition range where γ-γ' complex structure is formed, on the pseudo-ternary phase diagram of cobalt (Co), chromium (Cr), and titanium (Ti), containing 1.5 at. % of molybdenum (Mo).
FIG. 5 is a scanning electron microscope (SEM) image showing the microstructure of an alloy that does not form sufficient γ' precipitates in Comparative Example 3.
FIG. 6 is a scanning electron microscope image showing a microstructure in which secondary-phase precipitation occurred at the grain boundary but not inside grains in Comparative Example 5.
FIG. 7 provides scanning electron microscope images showing microstructures of alloys observed in Comparative Examples 29, 30, and 31 of the present disclosure.
FIG. 8 is a graph depicting tendencies of grain boundary segregation of alloying elements and intergranular fracture in the cobalt matrix, obtained through the first principles calculation (ab-initio simulation).
FIG. 9 provides scanning electron microscope images showing microstructures observed in Examples 36 to 40 of the present disclosure.
FIG. 10 provides scanning electron microscope images showing microstructures observed in Examples 48 to 52 of the present disclosure.
FIG. 11 provides scanning electron microscope images showing microstructures observed in Examples 53 to 57 of the present disclosure.
FIG. 12 provides scanning electron microscope images showing microstructures observed in Examples 38 and 58 to 61 of the present disclosure.
FIG. 13 shows the analysis results of 3D atom-probe tomography for Example 68 of the present disclosure.
FIG. 14 provides graphs showing uniaxial tensile stress-strain curves (thick lines) and stress-strain curves (thin lines) after partial deformation and then recovery through the repeated application of simulative self-healing simulation process in Examples 36 to 40 of the present disclosure.
FIG. 15 provides energy dispersive spectroscopy images showing an atom distribution at the tip of a defect after Example 38 of the present disclosure was deformed and then recovered by application of self-healing simulation process.

### DETAILED DESCRIPTION OF THE EXEMPLARY EMBODIMENTS

Hereinafter, embodiments of the present disclosure will be described in detail with reference to the accompanying drawings.

The alloy of the present disclosure has complex structure in which γ phase (primary phase, FCC solid solution) constituting matrix and γ' phase (secondary phase, L1₂ ordered phase) are mixed. In the present disclosure, phase diagrams showing the relationship between equilibrium phases were created through thermodynamic calculation (CALPHAD) using Thermo-Calc software (TCNI 8 database).

### Selection of composition of γ-γ' complex structured alloy (Confirmation of properties according to composition):

First, for the development of γ-γ' complex structured alloy having, as matrix, cobalt (melting point, 1495°C) stable at high temperature, and chrome having melting point of 1907°C was alloyed to ensure an alloy having higher melting point than existing nickel-based alloys. In such a case, chrome which easily can form solid solution with cobalt, improves phase stability of FCC crystal structure, and exhibits strengthening effect. In addition, the γ-γ' complex structure was stabilized by alloying titanium, which forms γ' precipitates, together with cobalt and chromium.

The manufacturing of γ-γ' complex structured cobalt-based alloy according to the present disclosure is performed by the steps of: preparing and melting the elements for alloying; subjecting the alloy to solution treatment; subjecting the solution-treated alloy to aging treatment to form L1₂ crystal-structured precipitates (γ'); and cooling the alloys.

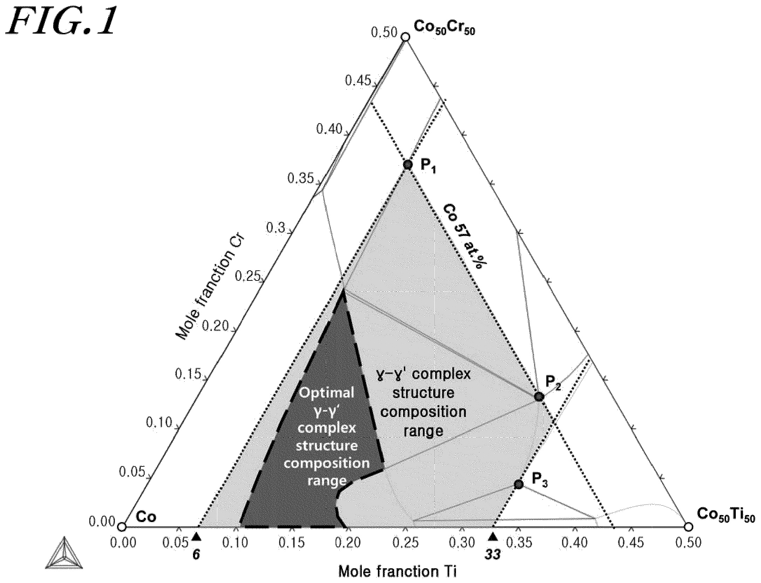

FIG. 1 is an isothermal section at 950°C of a ternary phase diagram of cobalt, chrome, and titanium mentioned as being essential for constituting a cobalt-based alloy according to the present disclosure, created through thermodynamic calculation. In general work environments in which cooling procedures in various temperature sections are conducted, the γ-γ' complex-structured alloys actually manufactured may be formed in a wider range than can be confirmed from a single isothermal section, or separate phases may not be formed depending on conditions. The reason is that upon the cooling of liquid-phase metals, solute atoms are supersaturated in solid solution and thus can remain in the matrix up to several times more than the theoretical solubility limit. Therefore, a composition range in which the γ-γ' complex structure is stable during the process can be defined by considering composition ranges including both of the γ and γ' phases at various temperatures.

Considering these facts, P1 and P3 in the diagram were selected by the minimum and maximum amounts of composition including both of γ and γ' phases on the basis of titanium, respectively. P2 was selected by the minimum amount of a composition including both of γ and γ' phases on the basis of cobalt. It can be seen from the results that as shown in the area indicated by dotted lines in FIG. 1, the minimum content (P1 based) was determined to be about 57 at.% and the maximum content was determined to be 92.5 at.% for cobalt, and the minimum content was determined to be 6 at.% on the basis of P1 and the maximum content was determined to be 33 at.% on the basis of P3 for titanium. Furthermore, the present diagram shows a composition range, in which the γ-γ' two phase complex structure is optimized by an additional heat treatment, through isothermal section analysis for various temperatures.

To allow the γ' precipitation phase to be easily precipitated by having a coherent interface with the alloy phase constituting the matrix, it is essential to control the lattice misfit of the γ' precipitation phase with the γ phase. In the present example, as an element for controlling the lattice misfit, elements having relatively large atomic radius including molybdenum (Mo), hafnium (Hf), tantalum (Ta), tungsten (W), and the like may be alloyed.

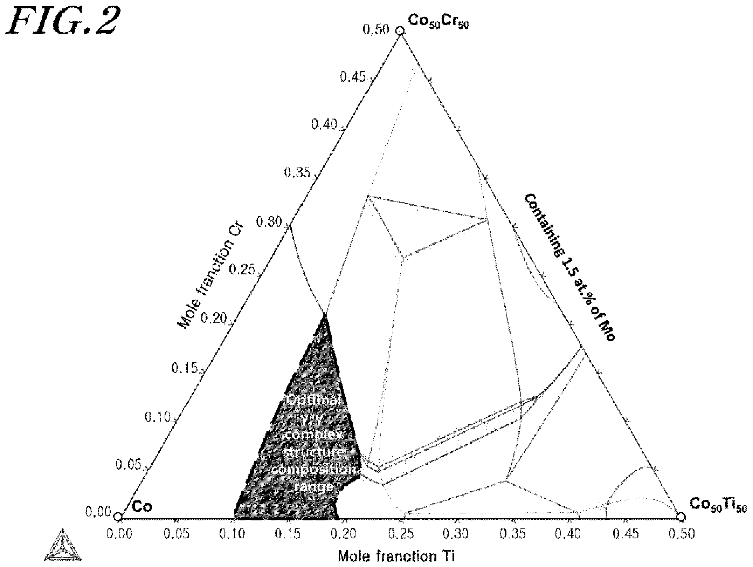

FIG. 2 is an isothermal section at 950°C of a ternary phase diagram of cobalt, chrome, and titanium when as a representative composition of a cobalt-based alloy according to the present disclosure, molybdenum is contained in 1.5 at.% relative to the entire alloy elements. As can be seen through the comparison with FIG. 1, even when molybdenum (Mo), hafnium (Hf), tantalum (Ta), and tungsten (W) were added at small amounts for the control of surface energy between matrix and precipitated phase, there was no large difference in view of the composition range in which the γ-γ' two phase complex structure was optimized.

These results mean that when a characteristic range having γ-γ' complex structure in the alloy of the present disclosure is determined, there is no problem even on the basis of the ternary composition range shown in FIG. 1. In other words, considering the presented drawings, the γ-γ' complex structure alloy formation range can be predicted even when misfit control elements (strengthening solute elements, S), for example, molybdenum (Mo), hafnium (Hf), tantalum (Ta), tungsten (W), or the like is alloyed with a ternary alloy of cobalt, chromium, and titanium.

Besides, for exhibiting self-healing property, healing solute elements (H) selected from the group consisting of boron (B), carbon (C), nitrogen (N), oxygen (O), phosphorus (P), and sulfur (S) may be alloyed in the alloy of the present disclosure.

Taken together, the composition of the cobalt-based alloy having self-healing property according to the present disclosure may be expressed as below.

[[CoₐTi_{b}Cr_{100-a-b}]_{1-0.01c}S_{c}]_{1-0.01d}H_{d}

(57≤a≤92.5, 6≤b≤33 (at.%), (a+b<100))
S means strengthening solute elements, and 0<c≤20 (at.%). In addition, H means a healing solute elements, and 0<d≤2 (at.%).

The value of c was limited as the maximum solubility (20 at.%) in the FCC cobalt alloy, of molybdenum, which is representative of strengthening solute elements expressed as S, and the value of d was limited as the maximum solubility (2 at.%) in the FCC cobalt alloy, of boron (B), which is representative of healing solute elements expressed as H.

In the composition range including both of the γ and γ' phases of the present disclosure, the γ-γ' two phase complex structure can be optimized through specialized heat treatment.

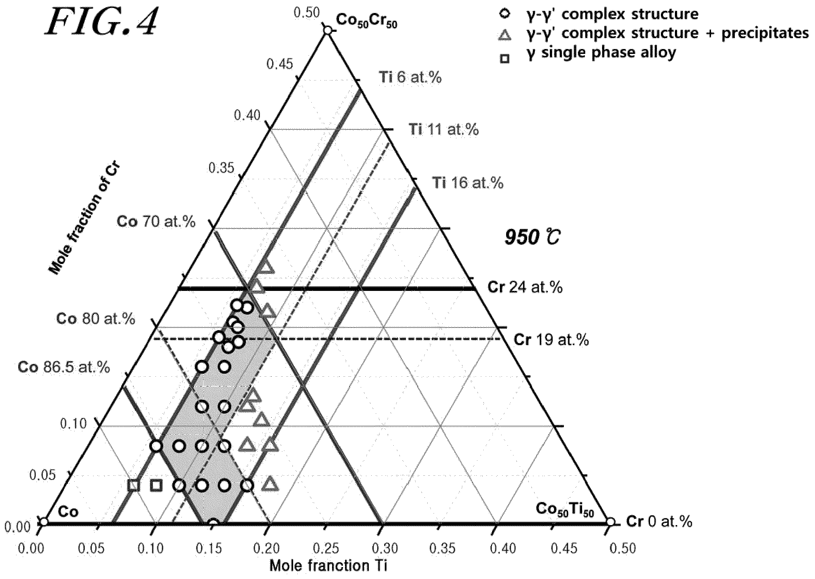

Hereinafter, examples and comparative examples, which were manufactured by applying three stages of (solution treatment at 1200°C for 20 hours) - (aging treatment at 950°C for 48 hours) - (air cooling), corresponding to a representative heat treatment process of the present disclosure, to Co-Cr-Ti alloys containing 1.5 at.% of molybdenum, will be described. The results corresponding to related examples and comparative examples are shown in Table 1 and FIG. 4 below.

In order to investigate the effect of the alloy composition in the present disclosure, master alloys were manufactured by preparing raw materials having purity of 99.9% or higher and employing arc-melting capable of quickly forming a bulk-type homogeneous solid solution. In the present disclosure, for the manufacturing of master alloys, induction casting capable of manufacturing a homogeneous alloy by melting raw materials through an electric field may be employed instead of arc-melting. Alternatively, master alloys can be manufactured through usual casting process by utilizing resistance heating capable of precise temperature control. Furthermore, in addition to the usual casting method capable of melting raw materials, master alloys can be manufactured by preparing raw materials into powders or the like and sintering the powders at high temperature and pressure through spark plasma sintering or hot isostatic pressing using powder metallurgy. The use of such sintering methods enables the precise control of microstructures and the manufacture of parts with a desired shape.

**TABLE 1**

| **Classification** | **Alloy composition (at.%, containing 1.5 at.% Mo)** | | | **Matrix phase** | **Note** |
|---|---|---|---|---|---|
| | Co | Cr | Ti | | |
| Comparative Example 1 | 100 | 0 | 0 | γ single phase | - |
| Comparative Example 2 | 75 | 25 | 0 | γ single phase | - |
| Comparative Example 3 | 90 | 4 | 6 | γ single phase | - |
| Example 1 | 86.5 | 8 | 5.5 | γ-γ' complex structure | γ' : 3 vol % |
| Example 2 | 86.5 | 4 | 9.5 | γ-γ' complex structure | γ' : 25 vol % |
| Example 3 | 85 | 0 | 15 | γ-γ' complex structure | γ' : 35 vol % |
| Example 4 | 84 | 8 | 8 | γ-γ' complex structure | γ' : 6 vol % |
| Example 5 | 84 | 4 | 12 | γ-γ' complex structure | γ' : 40 vol % |
| Example 6 | 82 | 8 | 10 | γ-γ' complex structure | γ' : 33 vol % |
| Example 7 | 82 | 4 | 14 | γ-γ' complex structure | γ' : 55 vol % |
| Example 8 | 80 | 12 | 8 | γ-γ' complex structure | γ' : 24 vol % |
| Example 9 | 80 | 8 | 12 | γ-γ' complex structure | γ' : 49 vol % |
| Example 10 | 80 | 4 | 16 | γ-γ' complex structure | γ' : 50 vol % |
| Example 11 | 78 | 16 | 6 | γ-γ' complex structure | γ' : 4 vol % |
| Example 12 | 78 | 12 | 10 | γ-γ' complex structure | γ' : 43 vol % |
| Example 13 | 76 | 16 | 8 | γ-γ' complex structure | γ' : 35 vol % |
| Example 14 | 75 | 19 | 6 | γ-γ' complex structure | γ' : 17 vol % |
| Example 15 | 74.5 | 18 | 7.5 | γ-γ' complex structure | γ' : 27 vol % |
| Example 16 | 73.5 | 18.5 | 8 | γ-γ' complex structure | γ' : 45 vol % |
| Example 17 | 73 | 20.5 | 6.5 | γ-γ' complex structure | γ' : 20 vol % |
| Example 18 | 73 | 20 | 7 | γ-γ' complex structure | γ' : 25 vol % |
| Example 19 | 72 | 22 | 6 | γ-γ' complex structure | γ' : 8 vol % |
| Example 20 | 71 | 22 | 7 | γ-γ' complex structure | γ' : 23 vol % |
| Example 21 | 88 | 4 | 8 | γ-γ' complex structure | γ' : 1 vol % |
| Example 22 | 78 | 8 | 14 | γ-γ' complex structure | additional precipitation |
| Example 23 | 78 | 4 | 18 | γ-γ' complex structure | additional precipitation |
| Example 24 | 76 | 12 | 12 | γ-γ' complex structure | additional precipitation |
| Example 25 | 76 | 8 | 16 | γ-γ' complex structure | additional precipitation |
| Example 26 | 75.5 | 10.5 | 14 | γ-γ' complex structure | additional precipitation |
| Example 27 | 75 | 13 | 12 | γ-γ' complex structure | additional precipitation |
| Example 28 | 69.5 | 21.5 | 9 | γ-γ' complex structure | additional precipitation |
| Comparative Example 4 | 69 | 24 | 7 | γ single phase | additional precipitation |
| Comparative Example 5 | 67.5 | 26 | 6.5 | γ single phase | additional precipitation |

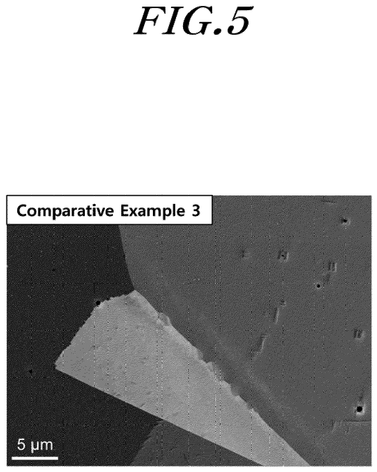

Referring to Table 1 and FIG. 4, the cobalt constituting the matrix of the alloy according to the present disclosure may be added at 86.5 at.% or less. When cobalt exceeds 86.5 at.%, all the other additional elements form solid solution with cobalt and result in single-phase cobalt-based alloy. FIG. 5 shows a microstructure of Comparative Example 3. As shown in the drawing, when the fractions of chromium and titanium for secondary phase precipitation become small by cobalt exceeding 88 at.%, γ' phase of less than 1 vol.% was formed. It is therefore advantageous that the content of cobalt is limited to 86.5 at.% or less to exhibit optimal complex structural characteristics.

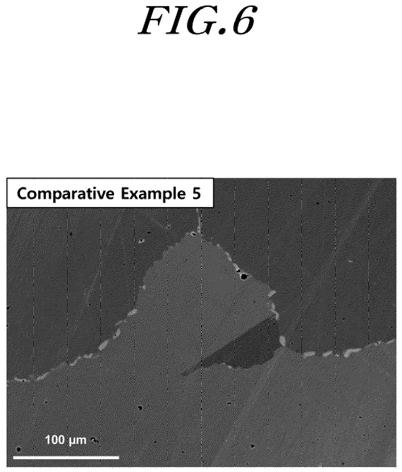

When additional precipitation phases are formed in the γ single-phase crystalline grain boundary in addition to the area where the γ single-phase alloy is formed, it causes deterioration in overall properties of the material, thereby making it difficult to exhibit optimal characteristics. There are two cases where such precipitation phases are formed: (i)a case where alloying elements are not sufficiently present in solid solution since the fraction of the cobalt element constituting the matrix is too low; and (ii)a case corresponding to a composition range in which a stable intermetallic compound, such as Cr₂Ti, can be formed. For example, it can be confirmed as shown in FIG. 4 that unwanted additional precipitates were easily formed when the content of cobalt was less than 70 at.%. It can be actually confirmed from the microstructure of Comparative Example 5 having a cobalt content of 67.5 at.% as shown in FIG. 6 that the precipitates were formed on the crystalline grain boundary of the alloy formed as single phase.

Titanium is an alloying element, which is alloyed with cobalt to from γ' phase, and needs to be essentially added to form γ-γ' complex structured alloy. It can be confirmed from the examples of Table 1 that γ' phase was formed only when titanium was necessarily added at 6 at.% or more. However, additional precipitates besides γ' phase may be formed when the amount of titanium is more than 16 at.%. For example, in cases of alloys having a ratio of chromium and titanium of about 2:1 while the fraction of titanium is as high as 11 at.% or more as in Example 22, small amounts of additional precipitates, such as Cr₂Ti may be formed on the basis of γ-γ' complex structured alloy. However, due to excellent characteristics of γ-γ' complex structure, small amounts of additional precipitates may have no serious effects on degradation of properties.

That is, the complex structured alloy of the present disclosure can be controlled through the content of chrome as well as the cobalt matrix, and when the fraction of titanium is 11 at.% or more, the complex structured alloy can exhibit optimal properties when the content of chromium is restricted by limiting the content of cobalt to 80 at.% or more.

In addition, for the formation of the γ-γ' complex structure, it is very important to consider a lattice misfit between each γ phase and each γ' phase. In general, the lattice constant of the γ' phase, which is formed by precipitation after titanium (1.76 Å) having a larger atomic radius than a transition metal is present in solid solution, has a large value compared with the γ phase as a matrix phase. In such a case, the precipitation of γ' may be inhibited due to the occurrence of a lattice misfit between respective phases.

**TABLE 2**

| **Element** | **Atomic radius (Å)** |
|---|---|
| Co | 1.52 |
| Cr | 1.66 |
| Co-Cr | 1.59 |
| Mo | 1.90 |
| Hf | 2.08 |
| Ta | 2.00 |
| W | 1.93 |
| Ti | 1.76 |

Therefore, in the present disclosure, as shown in Table 2 above, at least one element selected from the group consisting of molybdenum (Mo), hafnium (Hf), tantalum (Ta), and tungsten (W) was alloyed as strengthening solute elements, which have larger atomic radii than titanium and are easily form solid solution with transition metals. When the increment in lattice constant that may occur is calculated arithmetically, molybdenum (Mo), hafnium (Hf), tantalum (Ta) and tungsten (W) show a value that is about 15-20% larger and titanium shows a value that is about 9% larger compared with the average atomic radii of cobalt and chromium. That is, the strengthening solute element S, which is an element that is added for conserving the lattice misfit by titanium, is advantageously alloyed within up to 50% of the total titanium content so that the atomic radii between respective phases are not reversed.

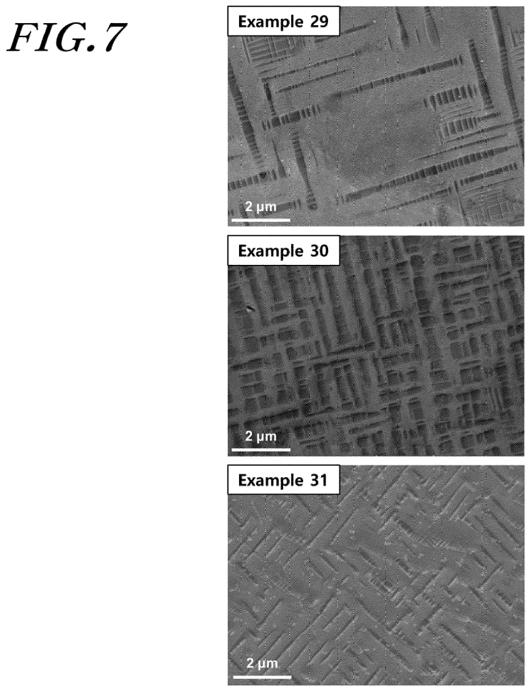

Table 3 below shows the results of adding molybdenum (Mo), hafnium (Hf), tantalum (Ta), and tungsten (W), which are strengthening solute elements expressed as S, in Example 8 having a representative composition of the present disclosure. It can be confirmed that as described above, the addition of the strengthening solute element at 50% or less compared with titanium leads to complex structures in all of the alloy compositions. Representative microstructures of the alloy developed in the step are shown in FIG. 7.

**TABLE 3**

| **Classification** | **Matrix alloy composition** | **Formed phase** | **Note** |
|---|---|---|---|
| Example 29* | Co₈₀Cr₁₂Ti₈ | γ-γ' complex alloy | - |
| Example 30 | Co₈ₒCr₁₂Ti₈Mo_{0.5} | γ-γ' complex alloy | - |
| Example 31 | Co₈₀Cr₁₂Ti₈Mo₂ | γ-γ' complex alloy | - |
| Example 32 | Co₈₀Cr₁₂Ti₈Mo₄ | γ-γ' complex alloy | 50% of Ti content (Boundary condition) |
| Example 33 | Co₈₀Cr₁₂Ti₈Hf₂ | γ-γ' complex | - |
| | | alloy | |
| Example 34 | Co₈₀Cr₁₂Ti₈Ta₂ | γ-γ' complex alloy | - |
| Example 35 | Co₈₀Cr₁₂Ti₈W₂ | γ-γ' complex alloy | - |

Last, in order to introduce self-healing mechanism into the cobalt-based alloy according to the present disclosure, healing solute elements including boron (B), carbon (C), nitrogen (N), oxygen (O), phosphorus (P), and sulfur (S) was added to the complex structured alloy, thereby maximizing solid-solution strengthening effect through spontaneous diffusion and segregation into defect sites formed in the environment of use, thus delaying defect formation and propagation.

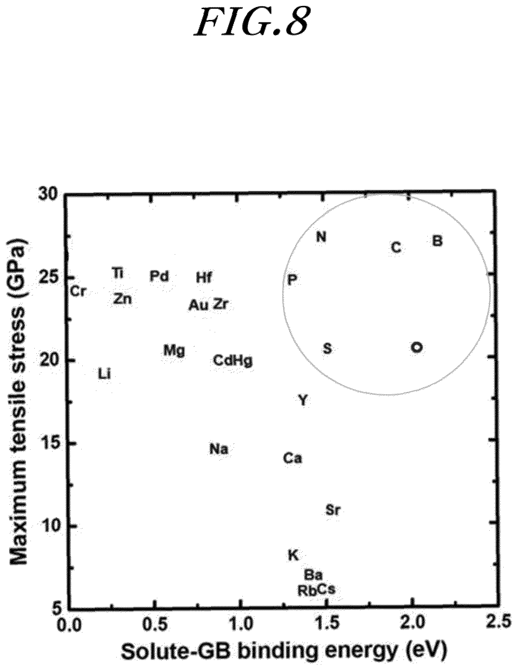

In order to show a strengthening effect by the grain boundary segregation of the healing solute elements, (1)spontaneous segregation needs to occur through thermodynamic stability of grain boundary segregation; and (2)when segregated at the grain boundary, the corresponding element needs to induce strengthening effect due to low tendency of brittle fracture. FIG. 8 shows tendencies of grain boundary segregation and intergranular fracture of elements added to cobalt matrix on the basis of the first principles calculation. As can be seen from the drawing, as a result of investigating, among the elements added to the cobalt matrix, elements that have high tendency of grain boundary segregation enabling selective spontaneous diffusion into defect sites and relatively small tendency of intergranular fracture preventing brittle fracture, it was verified that healing solute elements including boron (B), carbon (C), nitrogen (N), oxygen (O), phosphorus (P), and sulfur (S) would exhibit excellent characteristics.

**TABLE 4**

| **Classification** | **Alloy composition (at.%)** | **Formed phase** |
|---|---|---|
| Example 36 | (CO_{86.5}Cr₄Ti₈Mo_{1.5})_{99.8}B_{0.2} | γ-γ' complex alloy |
| Example 37 | (Co_{82.5}Cr₈Ti₈MO_{1.5})_{99.8}B_{0.2} | γ-γ' complex alloy |
| Example 38 | (Co_{78.5}Cr₁₂Ti₈Mo_{1.5})_{99.8}B_{0.2} | γ-γ' complex alloy |
| Example 39 | (Co_{74.5}Cr₁₆Ti₈Mo_{1.5})_{99.8}B_{0.2} | γ-γ' complex alloy |
| Example 40 | (Co₇₂Cr_{18.5}Ti₈Mo_{1.5})_{99.8}B_{0.2} | γ-γ' complex alloy |
| Example 41 | (Co_{78.5}Cr₁₂Ti₈Mo_{1.5})_{99.8}B_{0.1} | γ-γ' complex alloy |
| Example 42 | (Co_{78.5}Cr₁₂Ti₈Mo_{1.5})_{99.8}B_{0.5} | γ-γ' complex alloy |
| Example 43 | (Co_{78.5}Cr₁₂Ti₈Mo_{1.5})_{99.8}C_{0.2} | γ-γ' complex alloy |
| Example 44 | (Co_{78.5}Cr₁₂Ti₈Mo_{1.5})_{99.8}N_{0.2} | γ-γ' complex alloy |
| Example 45 | (Co_{78.5}Cr₁₂Ti₈Mo_{1.5})_{99.8}O_{0.2} | γ-γ' complex alloy |
| Example 46 | (Co_{78.5}Cr₁₂Ti₈Mo_{1.5})_{99.8}P_{0.2} | γ-γ' complex alloy |
| Example 47 | (Co_{78.5}Cr₁₂Ti₈Mo_{1.5})_{99.8}S_{0.2} | γ-γ' complex alloy |

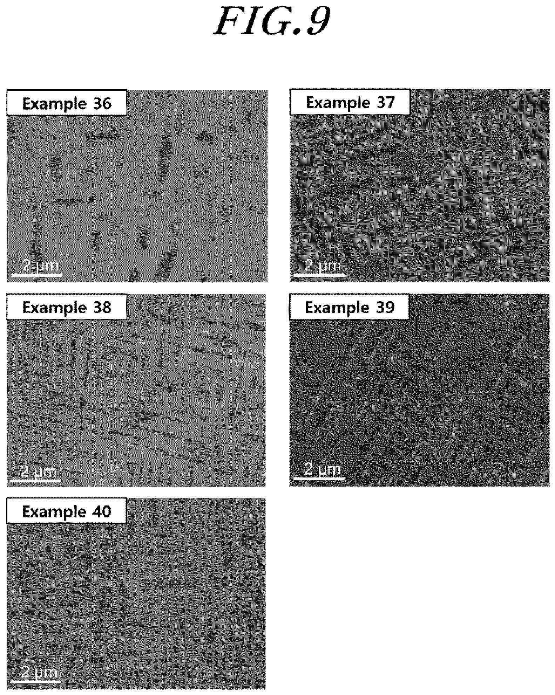

Table 4 above shows the results of alloying the alloys of the present disclosure together with healing solute elements which can show self-healing property. The detailed microstructures therefor are shown in FIG. 9. It was verified as shown in the above table that a γ-γ' complex structured alloy was formed in all of the alloy compositions including boron (B), carbon (C), nitrogen (N), oxygen (O), phosphorus (P), and sulfur (S). This means that the ability to form complex structured alloy was not inhibited even when healing solute elements are added at a small amount.

Taken together, a cobalt-based alloy composition range having self-healing property in which the γ-γ' complex structure is optimized through an additional post-heat treatment may be expressed as below.

[[CoₐTi_{b}Cr_{100-a-b}]_{1-0.01c}S_{c}]_{1-0.01d}H_{d}

Here, a (at.%) representing the composition of cobalt and b (at.%) representing the composition of titanium are expressed as below, and the composition of chromium is determined by the contents of cobalt and titanium.

(1) 70≤a≤86.5 when 6≤b≤11, and (2) 80≤a≤86.5 when 11<b≤16. (a+b<100)

S means at least one element selected from the group consisting of molybdenum (Mo), hafnium (Hf), Ta (tantalum (Ta), and tungsten (W). S can be alloyed up to 50% of the maximum titanium content. Exceeding this, the misfit control effect significantly decreases. Therefore, 0<c≤0.5b at.% may be expressed.

In addition, H means at least one element selected from the group consisting of boron (B), carbon (C), nitrogen (N), oxygen (O), phosphorus (P), and sulfur (S), which are healing solute elements. When the H content exceeds 0.5 at.%, unwanted precipitates, such as boride and nitride, are formed. Therefore, the content of H is preferably expressed as 0<d≤0.5 (at.%).

### Selection of process conditions for forming γ-γ' complex structure:

Table 5 shows what phase was formed when the complex structured alloys developed through the present disclosure were manufactured through three stages of (solution treatment at 1200°C for 20 hours) - (aging treatment at 950°C for 48 hours) - (air cooling), which are one of the most representative heat treatment process of the present disclosure. When the specimens aging-treated at 950°C were air cooled, the temperatures of the specimens reached room temperature within about 3 minutes, and accordingly, the air cooling rate may be determined to be 5 K/sec. By controlling these process variables, various boundary conditions in addition to the above heat treatment stages may be determined as heat treatment conditions for having γ-γ' complex structure.

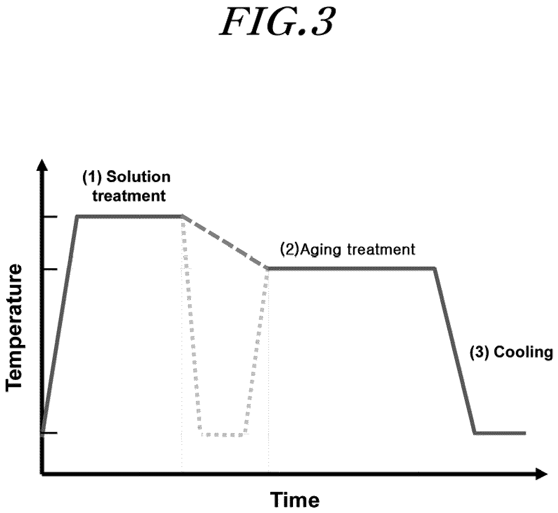

Hereinafter, a step of subjecting the solution-treated alloy to aging treatment to form L1₂ crystal-structured precipitates (γ') will be described in detail. The heat treatment process between the solution treatment as the first stage and the aging treatment as the second stage is simply expressed as furnace cooling in FIG. 3, but this is for convenience of drawings. That is, since the phase transformation is possible even in solid phase due to characteristics of the present complex-structured alloy where there is little difference in lattice constant between matrix alloy and precipitates, secondary phase precipitation is sufficiently possible even if furnace cooling is not conducted. Therefore, it is important that the respective heat treatment stages are all carried out, and the temperature elevating (or cooling) method to the aging treatment temperature for the formation of secondary phase precipitates is not relevant to the forming of all claimed alloy composition.

Table 5 shows that the heat treatment conditions were controlled for Example 38 of the present disclosure. The heat treatments were composed of solution treatment as the first stage, aging treatment as the second stage, and cooling as the third stage. The following table shows the conditions for solution treatment of the overall alloys and the resultant phases.

**TABLE 5**

| **Condition** | **Solution treatment temperature (°C)** | **Solution treatment time (hour)** | **Results** |
|---|---|---|---|
| Condition 1 | 1050 | 20 | γ single phase |
| Condition 2 | 1100 | 20 | γ single phase |
| Condition 3 | 1200 | 20 | γ single phase |
| Condition 4 | 1300 | 20 | γ single phase |
| Condition 5 | 1400 | 20 | γ single phase |
| Condition 6 | 1200 | 1 | γ single phase |
| Condition 7 | 1200 | 100 | γ single phase |
| Condition 8 | 1200 | 1000 | γ single phase |

It can be seen from the above table that γ single-phase alloy was formed upon the solution treatment at various temperatures. The temperature for the solution treatment cannot exceed 1495°C, which is the melting point of cobalt constituting the matrix. Therefore, 1400°C, which is about 100°C lower than the melting point and the rapid softening start point, was set as the highest solution treatment temperature. In addition, on the basis of the results of thermodynamic calculation, the lowest solution treatment temperature was set based on 1050°C, the temperature at which the γ phase is not formed.

As for the solution treatment of the present disclosure, which can be verified from condition 6, a homogeneous solution treatment was possible with only 1 hour of heat treatment at high temperature exceeding 70% of the melting point of the alloy. As for the alloy of the present disclosure, the solution treatment for less than 1 hour may not attain complete homogenization of the composition, and the solution treatment for more than 1000 hours may cause the precipitation of unexpected additional phases, resulting in deterioration. Therefore, solution treatment for less than 1 hour or more than 1000 hours is not preferable.

In the following, aging treatment capable of forming γ-γ' complex structure by heat-treating the solution-treated specimen at a high temperature will be described in detail. In the present disclosure, aging treatment after the solution treatment applied to condition 3 was systemically performed.

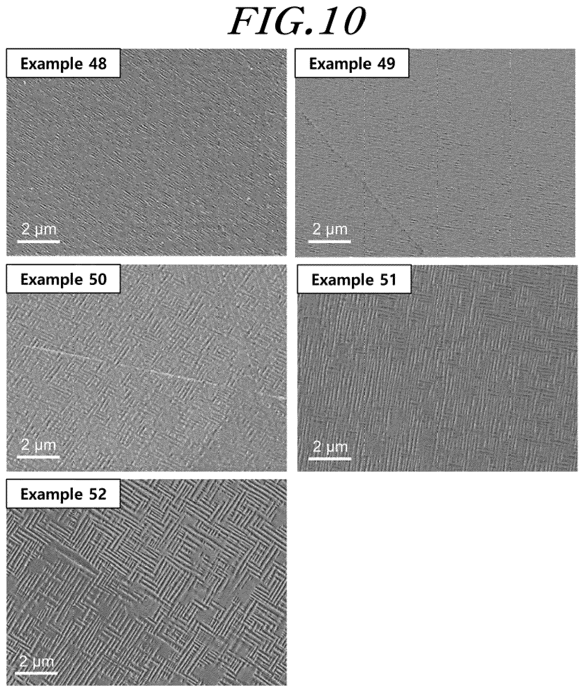

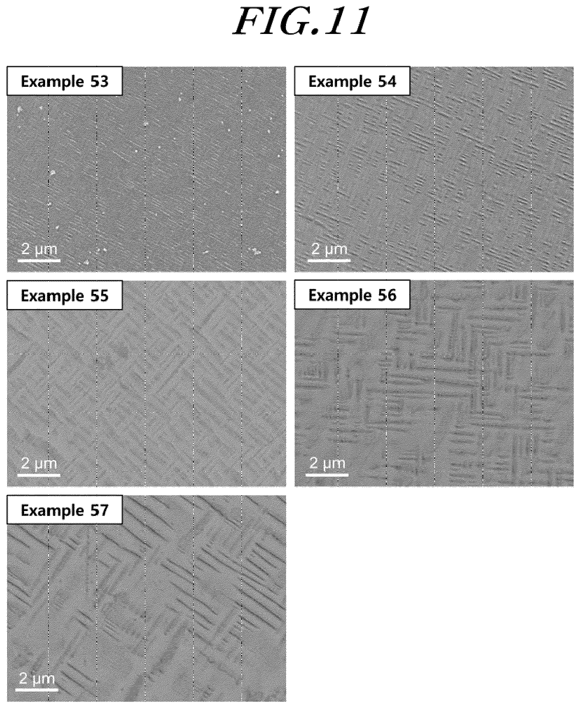

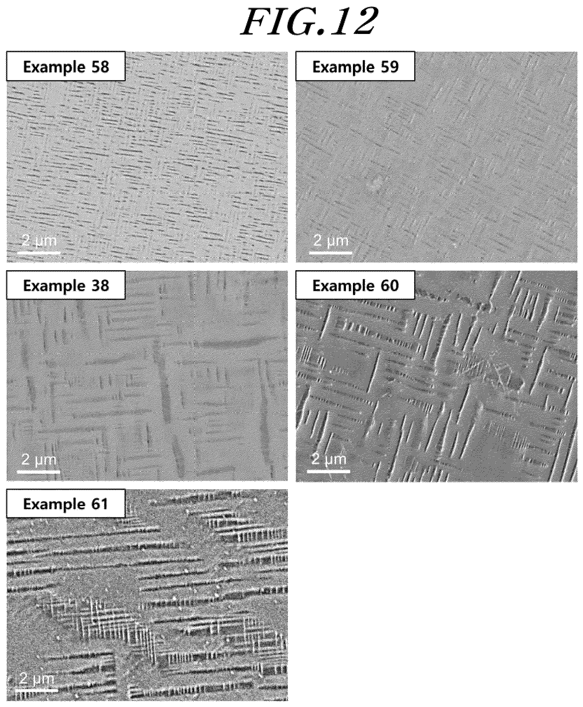

Table 6 shows the size and fraction of the γ' precipitation phase formed by controlling the aging temperature and time and the cooling condition for the alloy composition of Example 38. As can be seen from Table 6, γ' precipitation phases of various sizes and fractions were formed as the aging treatment conditions were changed. FIGS. 10 to 12 are scanning electron microscope images showing microstructures observed after the aging treatment of Examples 38 and Examples 48 to 61. It could be verified through the drawings that the size and fraction of the γ' precipitation phase were different depending on each temperature and time, but γ' precipitation phases showing strengthening effect were formed in all the compositions.

It could be verified that as the aging treatment time was increased, the fraction of the γ' phase increased and then was saturated at about 50 Vol.%. When the fraction of the γ' phase increased to 50 Vol.% or more, the soft γ' phase was not considered to be a parent phase, deviating from the standard of superalloys, and thus the fraction of the γ' phase is preferably less than 50 Vol.%.

It could also be verified that as the aging treatment temperature increased, the size of the maximum γ' phase increased. Such precipitate growth is due to diffusion in the solid phase, and the time required to grow to a specific size increases in the form of an exponential function. Considering that it was difficult to increase the γ' size to 0.5 µm or more in spite of aging treatment at the temperature of 950°C for 192 hours or more, it can be understood that the average size of the γ' phase is difficult to grow to 1 µm or more through heat treatment for 1000 hours or less, which is a general aging treatment condition. When the size of the precipitates becomes too large, such precipitates are difficult to sufficiently exhibit properties of superalloys.

**TABLE 6**

| **Classification** | **Aging temperature (°C)** | **Aging time (hour)** | **Cooling** | **γ' phase fracton (vol. %)** | **γ' size (um)** |
|---|---|---|---|---|---|
| Example 48 | 850 | 6 | Air cooling | 22.26 | 0.0516 |
| Example 49 | 850 | 12 | Air cooling | 35.65 | 0.0720 |
| Example 50 | 850 | 48 | Air cooling | 49.74 | 0.1252 |
| Example 51 | 850 | 96 | Air cooling | 46.11 | 0.1650 |
| Example 52 | 850 | 192 | Air cooling | 47.76 | 0.3008 |
| Example 53 | 900 | 6 | Air cooling | 18.85 | 0.0448 |
| Example 54 | 900 | 12 | Air cooling | 29.92 | 0.0998 |
| Example 55 | 900 | 48 | Air cooling | 36.77 | 0.1462 |
| Example 56 | 900 | 96 | Air cooling | 37.22 | 0.2260 |
| Example 57 | 900 | 192 | Air cooling | 36.67 | 0.3646 |
| Example 58 | 950 | 6 | Air cooling | 15.98 | 0.0534 |
| Example 59 | 950 | 12 | Air cooling | 19.31 | 0.0960 |
| Example 38* | 950 | 48 | Air cooling | 22.92 | 0.1796 |
| Example 60 | 950 | 96 | Air cooling | 20.78 | 0.2490 |
| Example 61 | 950 | 192 | Air | 16.01 | 0.4064 |
| | | | cooling | | |

In subsequent steps, the applicability of the aging treatment in a wider range of the alloy compositions was investigated. As a representative example, through thermodynamic calculation, the alloy composition of Example 38 was subjected to heat treatment up to 1000°C starting from 700°C, which is the highest temperature at which low-temperature stable HCP phase can be formed, while the temperature was raised by 50°C, and the time was changed from 1 hour up to 1000 hours by log scale. Table 7 shows the configuration of phase while the aging temperature and time were changed for the alloy composition of Example 38 of the present disclosure.

**TABLE 7**

| **Classification** | **Aging temperature (°C)** | **Aging time (hour)** | **Cooling** | **Phase configuration** |
|---|---|---|---|---|
| Example 62 | 700 | 48 | Air cooling | γ-γ' complex alloy |
| Example 63 | 800 | 48 | Air cooling | γ-γ' complex alloy |
| Example 64 | 1000 | 48 | Air cooling | γ-γ' complex alloy |
| Example 65 | 950 | 1 | Air cooling | γ-γ' complex alloy |
| Example 66 | 950 | 1000 | Air cooling | γ-γ' complex alloy |

As can be confirmed in the above table, γ-γ' complex alloys could be easily manufactured even when the specimens obtained by subjecting the solution treated alloy compositions in temperature range of 1050-1400°C for 1-1000 hours were subjected to aging treatment in temperature range of 700-1000 °C for 1-1000 hours. As for the alloy of the present disclosure, aging treatment for less than 1 hour may degrade the stability of microstructures due to the formation of meta-stable precipitation phase, and aging treatment for more than 1000 hours may cause the precipitation of unexpected additional phases, resulting in deterioration. Therefore, an aging treatment for less than 1 hour or more than 1000 hours is not preferable.

The microstructure of the complex structured alloy may be changed depending on the cooling method. Table 8 below shows the results of changing the type of cooling process, which is the third stage of the heat treatment process, after the alloy of Example 38 as a representative example of the present disclosure was manufactured. As can be confirmed in Example 67 of the following table, even water cooling caused no change in complex structured phase formation behavior compared with the above-described air cooling. However, in a case of furnace cooling consuming a long cooling time, such as less than 5 K/min (Example 68), small secondary precipitation causing precipitates of tens of nm sizes, which were previously difficult to find, occurred. Here, the γ' phases that are dynamically formed during cooling are named secondary precipitates compared with the γ' phases that are formed during aging treatment corresponding to isothermal heat treatment. It can be seen through these facts that the formation or non-formation of γ-γ' phase complex structure was not greatly influenced by the cooling method. The secondary precipitation behavior of γ' phase can be controlled through the control of cooling time.

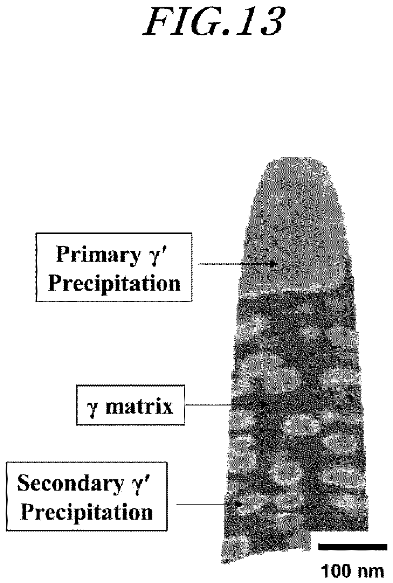

FIG. 13 shows the analysis results of 3D atom-probe tomography on Example 68 of the present disclosure. As can be seen from the drawing, in case of furnace cooling after aging treatment, γ' secondary precipitates with a size of tens of nanometers were formed besides γ' primary precipitates formed upon aging treatment.

**TABLE 8**

| **Classification** | **Aging temperature (°C)** | **Aging time (hour)** | **Cooling** | **Phase configuration** | **γ' phase secondary precipitation** |
|---|---|---|---|---|---|
| Example 67 | 950 | 48 | Water cooling | γ-γ' complex alloy | X |
| Example 68 | 950 | 48 | Furnace cooling | γ-γ' complex alloy | O |

### Confirmation of self-healing property through alloying of healing solute elements:

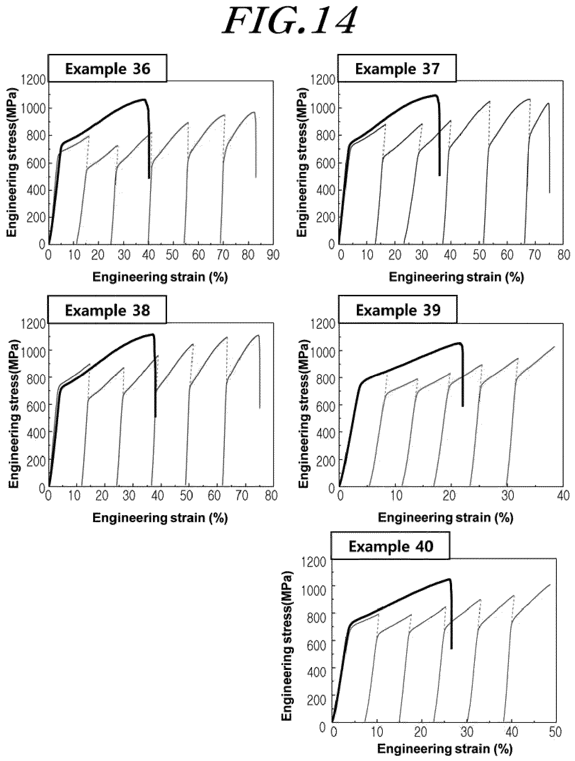

In the last step, it was investigated that healing solute elements, such as boron (B), carbon (C), nitrogen (N), oxygen (O), phosphorus (P), and sulfur (S) added to the cobalt alloy could be segregated around cracks through selective spontaneous diffusion into defect sites, thereby exhibiting self-healing property of delaying crack formation and propagation. To this end, the change in characteristics upon recovery treatment was investigated by subjecting Examples 36 to 40 to partial deformation and then repeatedly applying simulative self-healing processes thereto, as shown in FIG. 14. The self-healing property according to the present disclosure means a procedure wherein healing elements in solid solution inside alloy matrix are spontaneously diffused and segregated into defect sites including microcracks and the like formed upon the utilization of materials, thereby strengthening the defects sites, and therefore, self-healing may occur in real time even during the deformation at a high temperature, which is main environment of use of developed materials.

However, the direct observation of real-time defect formation and segregation behavior takes a long time and has some technical limitations. In the present disclosure, the possibility of healing was investigated by observing the property recovery behavior under a simulative self-healing process allowing quick healing behavior through high-temperature sustained heating for a long time after deformation, whereas the short exposure to a high-temperature environment is repeatedly happened during deformation in the use environment where self-healing actually occurs. However, this is for ease of verification, and when self-healing is possible by applying a simulative self-healing process, it means that self-healing behavior can spontaneously occur in real time in the environment of use of materials.

In each of the drawings of FIG. 14, the thickly expressed curve represents a stress-strain curve when alloys corresponding to each of Examples 36 to 40 were uniaxially tensile-strained until the fracture of the alloy. Although there were differences in each example, it could be verified that most of the alloys finally fractured at a strain rate of about 30%. In these alloys, the critical point of strain at which the characteristic recovery process to the initial state was possible in these alloys was confirmed to be the point of 80% of the elongation when the ultimate tensile stress (UTS) was shown. The thin curves shown in each of the drawings show the result of confirming characteristic recovery through a simulative self-healing process after the existing alloy was deformed only up to 40% of the elongation when the ultimate tensile strength (UTS) was shown.

In the present disclosure, the simulative self-healing process was performed in the conditions of heat treatment at 950°C for 6 hours, which correspond to one type of temperature and time conditions upon aging treatment for formation of a γ' precipitation phase of the composition of Example 38, and thereafter, mechanical property changes of the specimen were investigated. As a result of repeated performing such simulative self-healing processes until the alloys were completely fractured, all the alloys of the present disclosure had an elongation of 200% or more of the existing maximum elongation and no decrease in strength.

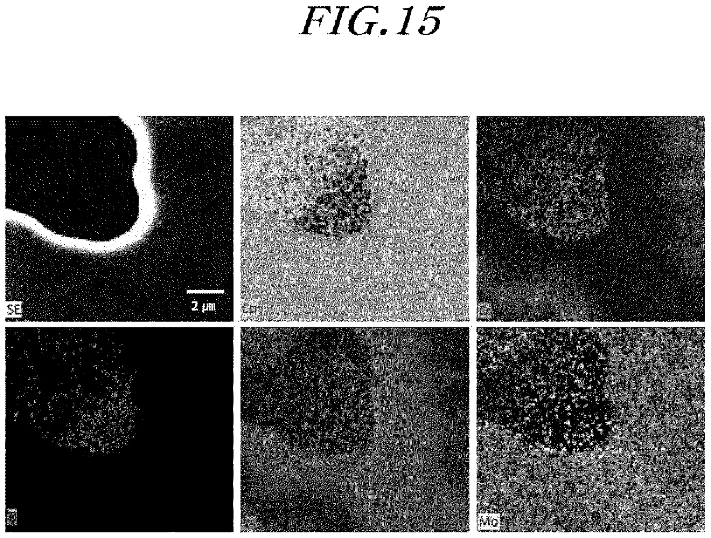

FIG. 15 shows the EDS results of investigating the tip of a crack formed inside after the specimen of Example 38 was deformed, and then recovered by application of self-healing recovery process. As shown in the drawing, a large amount of B atoms (healing solute element) was detected in the tip of the crack unlike the other areas, indicating that the healing solute atoms can be easily diffused and segregated into cracks through healing behavior.

To show such diffusion and segregation behavior, (1)the loss of the properties of the complex-structured alloys due to complete disappearance of the L1₂ precipitation phase needs to be prevented; and (2)a restriction condition of the temperature at which diffusion of the healing solute elements easily occurs needs to be satisfied. Therefore, the maximum temperature condition for the occurrence of self-healing may be limited to be 1000°C, which is the maximum aging treatment temperature for forming the above complex structure, and the minimum temperature condition may be limited to 300°C, which is known to be the temperature at which the interstitial diffusion of an FCC alloy is generally activated. The temperature is representative one of energy parameters, and thus the use environment enabling self-healing may be limited to have a condition in which at least one type of energy selected from external energy types (various types of energy, such as thermal energy, mechanical energy, electrical energy, and magnetic energy) corresponding to 300-1000°C is applied.

The scope of the present disclosure should be interpreted by claims attached thereto, and it should be interpreted that all technical spirits within the scope equivalent to the claims pertains to the scope of the present disclosure.

## Claims

1. A cobalt-based alloy having self-healing property, the cobalt-based alloy having composition as below:
[[CoₐTi_{b}Cr_{100-a-b}]_{1-0.01c}S_{c}]_{1-0.01d}H_{d}
(57≤a≤92.5 at.%, 6≤b≤33 at.%, a+b<100, S means strengthening solute elements, 0<c≤20 at.%, H means healing solute elements, and 0<d≤2 at.%),
wherein self-healing function is implemented by the healing solute element.

2. The cobalt-based alloy according to claim 1, comprising both of γ and γ' phases as constituent phases.

3. The cobalt-based alloy according to claim 2, wherein upon the deformation of the alloy, the healing solute elements are diffused and segregated into defect sites to strengthen deformed portion, thereby delaying crack formation and propagation, leading to the implementation of self-healing.

4. The cobalt-based alloy according to claim 2 or claim 3, wherein the fraction of the γ' phase is less than 50%.

5. The cobalt-based alloy according to any one of claims 2 to 4, wherein the size of the γ' phase is less than 1 µm.

6. The cobalt-based alloy according to any one of claims 2 to 5, further comprising secondary precipitates of the γ' phase having a size of tens of nanometers.

7. The cobalt-based alloy according to any one of claims 1 to 6, wherein the strengthening solute elements comprise at least one selected from the group consisting of Mo, Hf, Ta, and W.

8. The cobalt-based alloy according to any one of claims 1 to 7, wherein the healing solute elements comprise at least one selected from the group consisting of B, C, N, O, P, and S.

9. The cobalt-based alloy according to any one of claims 1 to 8, wherein when 6≤b≤11 (at.%), 70≤a≤86.5 (at.%), 0<c≤0.5b (at.%), and 0<d≤0.5 (at.%) (provided that a+b<100).

10. The cobalt-based alloy according to any one of claims 1 to 8, wherein when 11<b≤16 (at.%), 80≤a≤86.5 (at.%), 0<c≤0.5b (at.%), 0<d≤0.5 (at.%) (a+b<100).

11. A method for manufacturing a cobalt-based alloy having self-healing property, the method comprising:
preparing raw materials constituting the alloy according to any one of claims 1 to 10;
melting the raw materials to prepare an alloy;
subjecting the alloy to solution treatment;
subjecting the alloy to aging treatment; and
cooling the alloy,
wherein the alloy comprises γ and γ' phases together.

12. The method according to claim 11, wherein the solution treatment is carried out at temperature of 1050-1400°C for 1-1000 hours.

13. The method according to claim 11 or 12, wherein the aging treatment is carried out at temperature of 700-1000°C for 1-1000 hours.

14. The method according to any one of claims 11 to 13, wherein the fraction of the γ' phase is less than 50% by the aging treatment.

15. The method according to any one of claims 11 to 14, wherein secondary precipitates of the γ' phase are additionally formed during the cooling step.
